# EUROPEAN PATENT SPECIFICATION

(11) **EP 1 865 260 B1**
(45) Date of publication and mention of the grant of the patent: **08.04.2020**
(21) Application number: 07109626.7
(22) Date of filing: 05.06.2007
(51) Int. Cl.: F23R 3/20, F23R 3/34

(54) **Stage one turbine nozzle**
Düse der ersten Stufe einer Gasturbine
Buse de premier étage d'une turbine

(30) Priority: 05.06.2006 US 422123
(43) Date of publication of application: 12.12.2007
(73) Proprietor: GENERAL ELECTRIC COMPANY, Schenectady, NY 12345 (US)
(72) Inventor: WIDENER, Stanley Kevin, Greenville, NY 29607 (US); DAVIS, JR., Lewis Berkley, Niskayuna, NY 12309 (US)
(74) Representative: BRP Renaud & Partner mbB Rechtsanwälte Patentanwälte Steuerberater

(56) References cited:
- DE-A1- 3 803 992
- US-A- 3 735 930
- US-A- 4 070 826
- US-A- 4 798 048
- US-A- 5 297 391
- US-A1- 2003 024 234
- US-B2- 6 622 488

## Description

### TECHNICAL FIELD

The present application relates generally to gas turbine engines and more particularly relates to a stage one turbine nozzle for a gas turbine.

### BACKGROUND OF THE INVENTION

One method used to lower overall NO_{X} emissions in a gas turbine engine is to minimize the reaction zone temperature below the level at which NO_{X} emissions are formed. For example, commonly owned U.S. Patent No. 6,868,676 to Haynes, entitled "Turbine Containment System and Injector Therefore", shows the use of a secondary combustion system downstream of the primary combustion system. This secondary combustion system includes a number of injectors to inject fuel and other fluids at the head end of the combustor. The fuel burns quickly due to the high temperature environment and relieves the temperature of combustor head end so as to lower overall NO_{X} emissions.

Although testing of this secondary combustion system has shown promise in reducing overall NO_{X} emissions, such a system has not been widely adopted because of a concern with the durability of the fuel injectors. Specifically, the fuel injectors are positioned within the hot gas pathway. Any loss of cooling to the injectors therefore may result in the failure of the injectors and possible damage to the turbine as a whole.

There is a desire therefore for an improved secondary combustion system. Such a system should promote lower NO_{X} emissions while also being durable and reliable.

### SUMMARY OF THE INVENTION

The present application thus describes a stage one turbine nozzle. The stage one turbine nozzle includes a supply tube extending into the stage one nozzle, a number of injectors extending from the supply tube to an outer surface of the stage one nozzle, and an air gap surrounding each of the number of injectors.

A pair or a number of pairs of the injectors may branch off of the supply tube. The injectors may be flush with the outer surface of the stage one nozzle. The injectors may be positioned about a leading edge of the stage one nozzle. The injectors may be positioned on the outer surface of the stage one nozzle at an angle. The air gap is in communication with a cooling cavity of the stage one nozzle. The injectors provide a flow of fuel and the air gap provides a flow of air.

A pair of the injectors may branch off of the supply tube. The injectors may be flush with the outer surface of the stage one nozzle. The injectors are positioned about a leading edge of the stage one nozzle. The injectors are positioned on the outer surface of the stage one nozzle at an angle. The air gap is in communication with a cooling cavity of the stage one nozzle. The injectors provide a flow of fuel and the air gap provides a flow of air.

The present application further describes a method of reducing NO_{X} emissions in a gas turbine engine. The method which is not part of the present invention may include combusting a primary stream of fuel and a primary stream of air to create a hot gas stream, flowing the hot gas stream towards a number of stage one nozzles, flowing a secondary stream of fuel and a secondary stream of air from the number of stage one nozzles, and combusting the secondary stream of fuel and the secondary stream of air so as to lower the temperature of the hot gas stream. The secondary stream of air surrounds the secondary stream of fuel.

These and other features of the present application will become apparent to one of ordinary skill in the art upon review of the following detailed description when taken in conjunction with the several drawings and the appended claims.

### BRIEF DESCRIPTION OF THE DRAWINGS

Embodiments of the present invention will now be described, by way of example only, with reference to the accompanying drawings, in which:
Fig 1 is a perspective view of a stage one nozzle with the secondary combustion system as is described herein.
Fig. 2 is a top cross-sectional view of the stage one nozzle and the secondary combustion system of Fig. 1.

### DETAILED DESCRIPTION

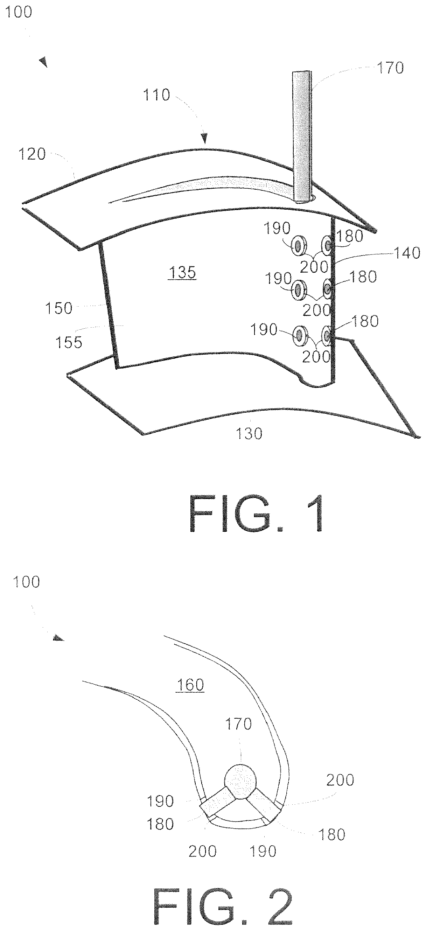

Referring now to the drawings, in which like numerals refer to like elements throughout the several views, Figs. 1 and 2 show a secondary combustion system 100 as is described herein. The secondary combustion system 100 is positioned within some or all of the stage one nozzles 110, one of which is shown in Figs. 1 and 2. The stage one nozzles 110 are the nozzles closest to the combustor and the primary combustion system. Each stage one nozzle includes an outside diameter 120 and an inside diameter 130. Each stage-one nozzle 110 also includes an airfoil 135 having a leading edge 140, a trailing edge 150 and an outer surface 155. A cooling cavity 160 extends within the stage one nozzle 110.

The secondary combustion system 100 includes a supply tube 170. The supply tube 170 enters the stage one nozzle 110 from the outside diameter 120 and extends into the cooling cavity 160. The supply tube 170 leads to a number of injectors 180. As is shown in Fig. 2, the individual injectors 180 branch off from the supply tube 170. Any number of injectors 180 may be used. The injectors 180 extend from the supply tube 170 to a number of apertures 190 positioned along the body of the airfoil 135. The injectors 180 are largely flush with the outer surface 155 and the apertures 190. The injectors 180 and the apertures 190 may be positioned at an angle to the stagnation streamlines as is shown or they may be positioned directly counter to the streamlines. Positioning of the injectors 180 is determined so as to provide the best mixing and combustion as well as providing protection to the stage one nozzle 110 itself from the hot combustion gases. As such, other orientations may be used herein. The injectors 180 and the apertures 190 are sized such that an air gap 200 extends between the injector 180 and the perimeter of the aperture 190. The air gap 200 provides a passageway to the cooling cavity 160 of the stage one nozzle 110. The air gap 200 accommodates thermal and stack up positional tolerances as well as provides a concentric jet of air to mix immediately with the fresh fuel prior to combustion. The jet of cooling air both shields the injectors 180 and mixes with the fuel stream.

In use, the injectors 180 receive a small portion of the total fuel injected into the turbine as a whole. Fuel passes through the supply tube 170 and the injectors 180 into the hot gas path. Likewise, air passes through the cooling cavity 160 and the air gaps 190. As described above, the fuel burns quickly due to the high temperature environment. Because the small portion of fuel thus burned would otherwise be burned in the combustor head end, the injection of this fuel through the stage one nozzles 110 reduces the temperature at the combustor head-end so as to lower the overall NO_{X} emissions. The fuel thus injected through the injectors 180 and burned also reaches the turbine quickly and is expanded to lower temperature and pressure, thereby reducing the residence time of the overall burned fuel-air mixture at the maximum turbine firing temperature and reducing NOₓ emissions.

## Claims

1. A stage one turbine nozzle (110) for a gas turbine, the nozzle comprising:
an airfoil (135), the airfoil comprising an airfoil body, wherein a number of apertures (190) are provided in the airfoil body and positioned along the airfoil body,
**characterized in** the nozzle further comprising a supply tube (170) extending into the airfoil (135) and distinct from the airfoil body and at least a pair of injectors (180) extending from the supply tube (170) through the apertures (190) to an outer surface (155) of the airfoil (135); wherein an air gap (200) is provided surrounding each of the injectors (180) between the respective injector and the airfoil body.

2. The turbine nozzle (110) of claim 1, wherein the plurality of injectors (180) are flush with the outer surface (155) of the stage one nozzle (110).

3. The turbine nozzle (110) of claim 1, wherein the plurality of injectors (180) is positioned about a leading edge (140) of the stage one nozzle (110).

4. The turbine nozzle (110) of claim 1, wherein the plurality of injectors (180) is positioned on the outer surface (155) of the stage one nozzle (110) at an angle.

5. The turbine nozzle (110) of claim 1, wherein the air gap (200) is in communication with a cooling cavity (160) of the stage one nozzle (110).

6. The turbine nozzle (110) of claim 1, wherein the plurality of injectors (180) provides a flow of fuel and the air gap provides a flow of air.

7. A gas turbine, the gas turbine comprising a secondary fuel injection system (100), characterized that the secondary fuel injection system is provided in a first stage nozzle (110) of the turbine, wherein the first stage turbine nozzle is a turbine nozzle of any of the preceding claims.

## Patentansprüche

1. Turbinendüse (110) der ersten Stufe für eine Gasturbine, wobei die Düse umfasst:
ein Schaufelblatt (135), wobei das Schaufelblatt einen Schaufelblattkörper umfasst, wobei eine Anzahl von Öffnungen (190) in dem Schaufelblattkörper vorgesehen und entlang des Schaufelblattkörpers positioniert ist,
**dadurch gekennzeichnet, dass** die Düse ferner umfasst: ein Zulaufrohr (170), das sich in das Schaufelblatt (135) hinein erstreckt und von dem Schaufelblattkörper abgegrenzt ist, und mindestens ein Paar Injektoren (180), die sich von dem Zulaufrohr (170) aus durch die Öffnungen (190) zu einer Außenoberfläche (155) des Schaufelblatts (135) erstrecken; wobei ein Luftspalt (200) bereitgestellt ist, der jeden der Injektoren (180) zwischen dem jeweiligen Injektor und dem Schaufelblattkörper umgibt.

2. Turbinendüse (110) nach Anspruch 1, wobei die Vielzahl von Injektoren (180) bündig mit der Außenoberfläche (155) der Düse (110) der ersten Stufe abschließt.

3. Turbinendüse (110) nach Anspruch 1, wobei die Vielzahl von Injektoren (180) um eine Vorderkante (140) der Düse (110) der ersten Stufe positioniert ist.

4. Turbinendüse (110) nach Anspruch 1, wobei die Vielzahl von Injektoren (180) in einem Winkel an der Außenoberfläche (155) der Düse (110) der ersten Stufe positioniert ist.

5. Turbinendüse (110) nach Anspruch 1, wobei der Luftspalt (200) mit einem Kühlhohlraum (160) der Düse (110) der ersten Stufe in Verbindung steht.

6. Turbinendüse (110) nach Anspruch 1, wobei die Vielzahl von Injektoren (180) einen Kraftstoffstrom bereitstellt und der Luftspalt einen Luftstrom bereitstellt.

7. Gasturbine, wobei die Gasturbine ein sekundäres Kraftstoffeinspritzsystem (100) umfasst, **dadurch gekennzeichnet, dass** das sekundäre Kraftstoffeinspritzsystem in einer Düse (110) der ersten Stufe der Turbine bereitgestellt ist, wobei die Turbinendüse der ersten Stufe eine Turbinendüse nach einem der vorangehenden Ansprüche ist.

## Revendications

1. Buse de premier étage de turbine (110) pour une turbine à gaz, la buse comprenant :
un profil aérodynamique (135), le profil aérodynamique comprenant un corps de profil aérodynamique, dans laquelle un certain nombre d'ouvertures (190) sont fournies dans le corps de profil aérodynamique et positionnées le long du corps de profil aérodynamique,
**caractérisée par** la buse comprenant en outre un tube d'alimentation (170) s'étendant dans le profil aérodynamique (135) et distinct du corps de profil aérodynamique et au moins une paire d'injecteurs (180) s'étendant depuis le tube d'alimentation (170) à travers les ouvertures (190) vers une surface externe (155) du profil aérodynamique (135) ; dans laquelle un espace d'air (200) est fourni entourant chacun des injecteurs (180) entre l'injecteur respectif et le corps de profil aérodynamique.

2. Buse de turbine (110) selon la revendication 1, dans laquelle la pluralité d'injecteurs (180) affleurent la surface externe (155) de la buse de premier étage (110).

3. Buse de turbine (110) selon la revendication 1, dans laquelle la pluralité d'injecteurs (180) est positionnée autour d'un bord d'attaque (140) de la buse de premier étage (110).

4. Buse de turbine (110) selon la revendication 1, dans laquelle la pluralité d'injecteurs (180) est positionnée sur la surface externe (155) de la buse de premier étage (110) selon un angle.

5. Buse de turbine (110) selon la revendication 1, dans laquelle l'espace d'air (200) est en communication avec une cavité de refroidissement (160) de la buse de premier étage (110).

6. Buse de turbine (110) selon la revendication 1, dans laquelle la pluralité d'injecteurs (180) fournit un flux de carburant et l'espace d'air fournit un flux d'air.

7. Turbine à gaz, la turbine à gaz comprenant un système d'injection de carburant secondaire (100), **caractérisée en ce que** le système d'injection de carburant secondaire est fourni dans une buse de premier étage (110) de la turbine, dans laquelle la buse de premier étage de turbine est une buse de turbine selon l'une quelconque des revendications précédentes.
